# EUROPÄISCHE PATENTSCHRIFT

(11) **EP 1 206 180 B1**
(45) Veröffentlichungstag und Bekanntmachung des Hinweises auf die Patenterteilung: **26.03.2003**
(21) Anmeldenummer: 00947992.4
(22) Anmeldetag: 24.07.2000
(51) Int. Cl.: A01N 1/02, C12N 5/00

(54) **VERFAHREN ZUM DEHYDRATISIEREN VON BIOLOGISCHEN GEWEBEN ZUR HERSTELLUNG VON TRANSPLANTAT-KONSERVEN**
METHOD FOR DEHYDRATING BIOLOGICAL TISSUE FOR PRODUCING PRESERVED TRANSPLANTS
PROCEDE DE DESHYDRATATION DE TISSUS BIOLOGIQUES POUR LA PRODUCTION CONSERVES DE GREFFONS

(30) Priorität: 26.08.1999 DE 19940426
(43) Veröffentlichungstag der Anmeldung: 22.05.2002
(73) Patentinhaber: Tutogen Medical GmbH, 91077 Neunkirchen am Brand (DE)
(72) Erfinder: BAUMGARTNER, Ludwig, D-90425 Nürnberg (DE)
(74) Vertreter: Manitz, Finsterwald & Partner GbR
(86) Internationale Anmeldenummer: EP0007078
(87) Internationale Veröffentlichungsnummer: WO01013718

(56) Entgegenhaltungen:
- US-A- 5 782 914
- US-A- 5 800 978
- LEE, S L: "Optimal Conditions for Longterm Storage of Native Collagens" COLLAGEN REL. RES., Bd. 3, Nr. 4, - 1983 Seiten 305-315, XP000943421 Bethesda, (USA)
- PELKER, RL ET AL: "Biomechanical Properties of Bone Allografts" CLIN. ORTHOPAEDICS AND REL. RES., Nr. 174, - 1983 Seiten 54-57, XP000943409 Yale Univ. (USA)
- TERRACIO, L ET AL: "Ultrastructural Observations on Tissues Processed by a Quick Freezing, Rapid-Drying Method: Comparison with Conventional Specimen Preparations" CRYOBIOLOGY, Bd. 18, - 1981 Seiten 55-71, XP000943410 New York (USA)
- PETERS, K-R UND POHL, R: "Freeze-Substitution of Chemically Stabilized Samples for Biological Field Emission Scanning Electron Microscopy" MICROSC. RES. AND TECHNIQUE, Bd. 22, Nr. 2, - 1992 Seiten 170-184, XP000943413 New York (USA)

## Beschreibung

Die Erfindung betrifft ein Verfahren zum Dehydratisieren von biologischen Geweben zur Herstellung von Transplantat-Konserven.

Verfahren zum Dehydratisieren von biologischen Geweben zur Herstellung von Transplantat-Konserven liefern autogene, allogene oder xenogene Transplantate, die dem Chirurgen bei Bedarf jederzeit zur Verfügung stehen.

Transplantate sollten eine dem Nativgewebe, zum Beispiel Haut, Sehnen, Knochen, sehr ähnliche morphologische Struktur aufweisen, und ihre Eigenschaften sollten weitgehend denen des Nativgewebes entsprechen. Zu den erforderlichen Eigenschaften gehören innere Oberfläche, Handhabbarkeit und Elastizität. Darüberhinaus sind bei der Herstellung von Transplantatkonserven auch noch weitere Kriterien zu beachten. Das Transplantat muß im sterilen Zustand praktisch beliebig lang unter Erhalt seiner Eigenschaften aufbewahrt werden können. Ferner muß es eine gewisse Resistenz gegen den Abbau durch den Empfängerorganismus haben, damit es als Leitschiene für einsprießendes Gewebe fungieren kann.

Ein bekanntes Verfahren zum Dehydratisieren von biologischen Geweben zur Herstellung von Transplantat-Konserven bedient sich der Gefriertrocknung. Das wasserhaltige Gewebe wird bei ca. -25°C bis -40°C eingefroren und das entstandene Eis durch Sublimieren im Vakuum entfernt. Das resultierende Gewebe weist einen geringen Wassergehalt auf. In sterilem Zustand kann es lange Zeit unter Erhalt seiner Eigenschaften aufbewahrt werden und steht bei Bedarf als gebrauchsfertige Transplantat-Konserve zur Verfügung.

Dieses Verfahren ist jedoch mit Nachteilen verbunden. Es entstehen bei flächigen kollagenen Geweben, zum Beispiel der Dura mater, relativ dicke schwammartige Materialien, was deren Handhabung erschwert. Das kollagene Ausgangsgewebe ist im feuchten Zustand ein gequollenes Fasergeflecht, und dieser Zustand wird beim Tieffrieren fixiert. Die beim Einfrieren zwischen Fasern und Fibrillen sich bildenden Eiskristalle lockern das Fasergefüge. Bei der anschließenden Sublimation entstehen Hohlräume im Gewebe, die dessen Eigenschaften, verglichen mit dem nativen Gewebe, verschlechtern. Insbesondere die Elastizität wird erheblich erniedrigt. Ferner wird infolge partieller Verleimung der Fibrillen die innere Oberfläche drastisch erniedrigt. Dadurch hat das resultierende Produkt bei der Verwendung als Transplantat nur noch einen stark verminderten Leitschieneneffekt für einsprießendes Bindegewebe.

Wegen dieser Nachteile der Gefriertrocknung ist in der DE 29 06 650 C2 ein Verfahren beschrieben, bei dem das kollagene Gewebe mit einem organischen, mit Wasser mischbaren Lösemittel dehydratisiert wird. Bei diesem Verfahren findet während der sukzessiven Extraktion des Wassers eine allmähliche Entquellung des biologischen Gewebes statt, so daß die native fibrilläre Struktur erhalten bleibt und Verleimungen der Fibrillen nicht auftreten. Folglich entspricht die innere Oberfläche des so dehydratisierten Gewebes derjenigen, die das native Gewebe aufweist. Die Elastizität bleibt ebenfalls im wesentlichen erhalten. Bei diesem Verfahren sind allerdings zur weitgehenden Dehydratisierung eine Anzahl von Extraktionsschritten erforderlich, bei denen das Lösemittel immer wieder erneuert werden muß. Bei Spongiosa Knochen sind bis 20 Extraktionsschritte erforderlich. Dies stellt ein zeitlich aufwendiges Verfahren dar. Außerdem ist der häufige Wechsel des Lösemittels arbeits- und kostenintensiv. Ferner ist ein umweltschonendes Recyclingverfahren für das Lösemittel notwendig.

In der DE 38 35 237 C1 wird ein Verfahren beschrieben, bei dem Rinder-Pericard-Gewebe mit Aceton entwässert, an der Luft getrocknet, mit Wasser rehydratisiert und dann gefriergetrocknet wird. Erstens ist dieses Verfahren relativ umständlich, und zweitens treten dieselben Nachteile auf, wie sie oben bei dem Verfahren der Gefriertrocknung geschildert wurden, da das rehydratisierte Gewebe gefriergetrocknet wird.

Aus der US-A-5,782,914 ist ein Verfahren zur Herstellung eines sterilisierten Gewebes bekannt, bei dem nach der Reinigung des Gewebes folgende Schritte durchgeführt werden: Chemische Vernetzung mit einer wässrigen Glutaraldehydlösung, Einweichen in 70 %-igem Ethanol für längere Zeit zur Entfernung von biologischen Verunreinigungen und zum Abtöten von Mikroben, Auswaschen aller Verarbeitungschemikalien mit Wasser und Vakuumtrocknung.

Die US-A-5,800,978 beschreibt ein Verfahren zum Gefriertrocknen von Zellen, Zellmembranen und zellähnlichen Materialien. Bei diesem Verfahren wird eine wässrige Mischung, die die Zellmaterialien und eine kryoschützende Komponente enthält, der Gefriertrocknung unterworfen.

Collagen Rel Res. Vol. 3/1983, Seiten 305 bis 315 beschreibt optimale Bedingungen, um natives Collagen lange lagern zu können, ohne dass es die biologische Aktivität, insbesondere die Fibrillenbildung verliert.

Die Druckschrift Cryptogamie, Mycol. 1997, 18(2), 157 - 163 beschreibt die Konservierung von Pilzen durch Gefriertrocknung. Um die intrazelluläre Kristallisation während des Frierens zu vermeiden kann die Kühlungsrate gesteuert werden, und es können kryoschützende Stoffe zugesetzt werden.

Aufgabe der vorliegenden Erfindung ist die Bereitstellung eines Verfahrens zum Dehydratisieren von biologischen Geweben zur Herstellung von Transplantat-Konserven, bei dem einerseits die native Struktur des kollagenhaltigen Gewebes weitgefhend erhalten bleibt und das andererseits weniger zeitaufwendig sowie weniger arbeits- und kostenintensiv ist.

Zur Lösung dieser Aufgabe wird ein Verfahren zum Dehydratisieren von biologischen Geweben zur Herstellung von Transplantat-Konserven vorgeschlagen, bei dem in einer ersten Stufe mit einem organischen, mit Wasser mischbaren Lösemittel das Gewebe teilweise dehydratisiert wird und in einer zweiten Stufe durch Gefriertrocknung das Gewebe weiter dehydratisiert wird.

Mit diesem zweistufigen Verfahren ist es möglich, eine schnellere sowie arbeits- und kostengünstigere Entwässerung zu erreichen unter gleichzeitigem Erhalt der nativen Struktur, insbesondere der inneren Oberfläche, sowie der Elastizität des kollagenen Materials. Die Zahl der Extraktionsschritte mit dem organischen Lösemittel kann deutlich erniedrigt werden, verglichen mit einem Konservierungsverfahren, bei dem ausschließlich mit organischen Lösemitteln dehydratisiert wird. Dadurch wird das Konservierungsverfahren wesentlich verkürzt, Lösemittel eingespart und folglich weniger Lösemittel der Recyclierung zugeführt sowie häufiges arbeitsaufwendiges Auswechseln des mit Wasser angereicherten Lösemittels gegen frisches Löse-Lösemittel eingespart. Die Gefriertrocknungsstufe bietet zusätzlich den Vorteil der einfachen Handhabung durch die apparative voll automatisierte Trocknung. Die eingangs genannten Nachteile der Gefriertrocknung treten bei dem erfindungsgemäßen Verfahren überraschender Weise nicht auf.

Als biologische Gewebe können beim erfindungsgemäßen Verfahren humane oder tierische Gewebe verwendet werden, zum Beispiel Haut, Dura mater, Fascia lata, Sehnen, Gefäße, Knorpel, Pericard, Knochen sowie aus Knochen hergestellte Platten, Nägel, Stifte, Schrauben. Diese Gewebe bestehen aus Kollagen oder aus Kollagen und mineralischen Bestandteilen. Die nach dem erfindungsgemäßen Verfahren hergestellten Transplantate stehen dem Chirurgen jederzeit zur Verfügung.

Vorzugsweise wird in der ersten Stufe das Gewebe auf einen Wassergehalt im Bereich von 10 Gew.-% bis 25 Gew.-% mit dem organischen, mit Wasser mischbaren Lösemittel dehydratisiert. Bei Weich-Geweben, wie zum Beispiel Haut, Dura mater, Fascia lata, wird vorzugsweise auf einen Wassergehalt im Bereich von 17 Gew.-% bis 20 Gew.-% dehydratisiert. Bei Hart-Geweben, wie Knochen, insbesondere Spongiosa Knochen, wird vorzugsweise auf einen Wassergehalt im Bereich von 10 Gew.-% bis 15 Gew.-% entwässert. Dabei wird, wie zu erwarten, die Struktur des nativen Gewebes erhalten. Überraschend ist jedoch, daß die sich anschließende Gefriertrocknung in der zweiten Stufe zur weiteren Dehydratisierung bis auf den gewünschten möglichst niedrigen Wassergehalt von unter 8 Gew.-% sich nicht negativ auf die Gewebestruktur auswirkt.

Als Lösemittel können in an sich bekannter Weise zum Beispiel Methanol, Ethanol, Propanol, Isopropanol, Aceton, Methylethylketon oder deren Gemische verwendet werden. Bevorzugt wird Aceton als organisches, mit Wasser mischbares Lösemittel eingesetzt. Das verwendete Lösemittel soll einen möglichst niedrigen Wassergehalt aufweisen, vorzugsweise sollte es wasserfrei sein. Die Dehydratisierung mit dem Lösemittel wird bei Temperaturen im Bereich von 0°C bis 70°C je nach verwendetem Lösemittel durchgeführt. Vorzugsweise erfolgt die Dehydratisierung der ersten Stufe bei Raumtemperatur.

Vorzugsweise wird das Gewebe nach der Dehydratisierung der ersten Stufe einem Vakuum ausgesetzt, bevor es auf Temperaraturen von ca. -25°C bis -40°C tiefgefroren wird. Dadurch wird das organische Lösemittel weitgehend aus dem Gewebe entfernt.

Bei der Dehydratisierung insbesondere von Spongiosa Knochen kann es vorteilhaft sein, in der ersten Stufe während der Dehydratisierung mit dem organischen Lösemittel gleichzeitig eine Behandlung mit Ultraschall, Vibratoren oder Schüttlern vorzunehmen. Dies fördert ein besseres Eindringen des Lösemittels in die feinen Kanäle des Spongiosa Knochens und dadurch die Entfettung und Dehydratisierung. Zu dem gleichen Zweck kann auch ein Überdruck, alternierender Druck oder Unterdruck angelegt werden. Ferner kann es vorteilhaft sein, vor dem ersten und nach jedem Extraktionsschritt eine Vakuumbehandlung vorzunehmen, bevor im nächsten Schritt mit frischem Lösemittel dehydratisiert wird. Auch dies fördert die Entfettung und einen besseren Austausch des wasserhaltigen organischen Lösemittels in den Kanälen gegen frisches organisches Lösemittel. Alle diese Maßnahmen können auch bei Weich-Geweben vorgenommen werden.

Die Gefriertrocknung in der zweiten Stufe erfolgt in einer üblichen Gefriertrocknungsanlage. Darin wird das teilweise dehydratisierte Gewebe allmählich auf Temperaturen von beispielsweise -25°C bis -40°C gebracht und das im Gewebe entstandene Eis durch Anlegen eines Vakuums durch Sublimation entfernt. Wie weiter oben bereits ausgeführt, wird vorzugsweise vor der Gefriertrocknung, d.h. vor dem Abkühlen des Gewebes auf tiefe Temperaturen, ein Vakuum angelegt. Dadurch wird das Lösemittel zu einem Teil aus dem Gewebe entfernt. Daran schließt sich die Gefriertrocknung an.

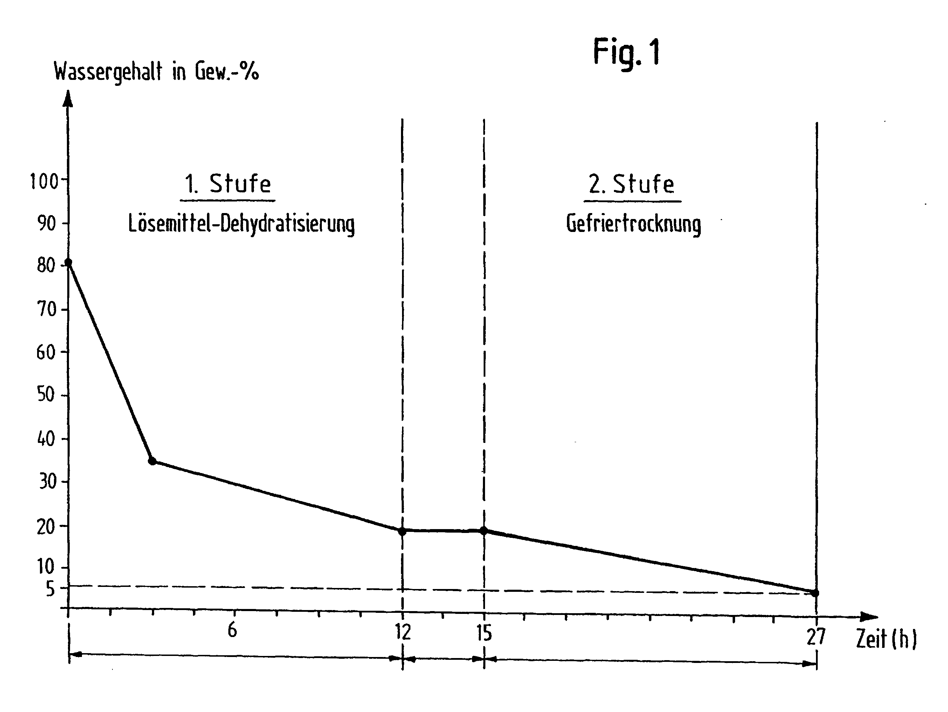

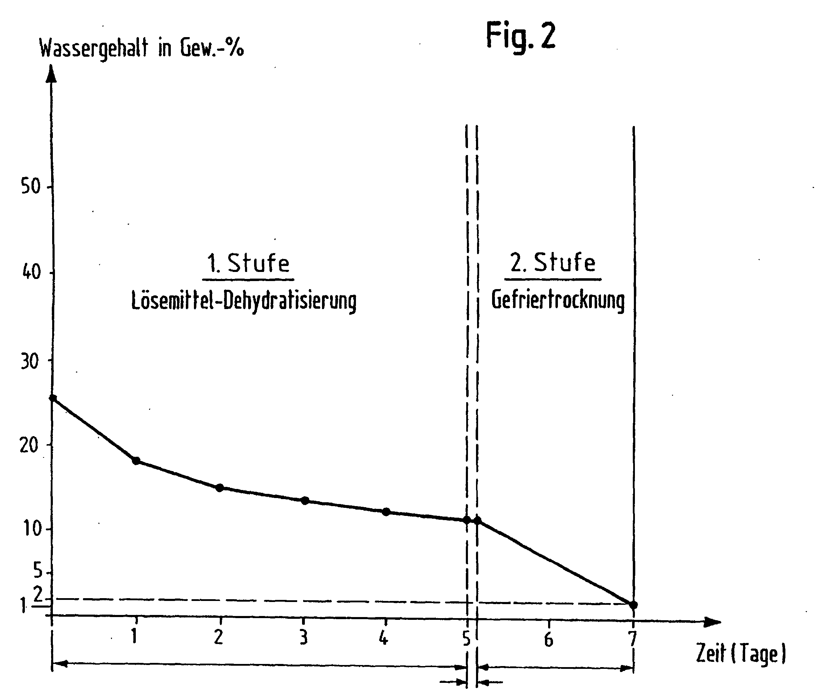

Die Erfindung wird an Hand der folgenden Beispiele und der Figuren 1 und 2 näher erläutert. Die Figuren 1 und 2 sind Diagramme, in denen der zeitliche Verlauf der Dehydratisierung der Gewebe in den Beispielen gezeigt ist. Auf der Abszisse ist die Zeit in Stunden bzw. Tagen und auf der Ordinate der Wassergehalt in Gew.-%, bezogen auf das Gesamtgewicht des zu dehydratisierenden Materials, aufgetragen.

### Beispiel 1

Dura mater wird dem menschlichen Körper entnommen und in geeigneter, dem Fachmann bekannter Weise von antigenen Stoffen und Enzymen befreit. Zur Konservierung werden die so gereinigten Gewebestücke zweimal je sechs Stunden lang durch Einlegen in wasserfreies Aceton bei Raumtemperatur behandelt. Die Lösemittelmenge beträgt jeweils 500% des Naßgewichts des Gewebes. Dabei erfolgt eine Entquellung des Gewebes von 0,65 mm auf 0,57 mm. Der Wassergehalt beträgt nach Abschluß dieser ersten Dehydratisierungsstufe 20 Gew.-%.

In der zweiten Stufe wird das Gewebe in einer Gefriertrocknungsanlage während 3 Stunden auf - 40°C abgekühlt. Danach wird ein Vakuum von 1,2 mbar angelegt zur Entfernung des im Gewebe gebildeten Eises durch Sublimation. Die Stellplattentemperatur beträgt 35°C. Der Wassergehalt beträgt nach der zweiten Stufe, die insgesamt 15 Stunden dauert, 6 Gew.-%. Die Dicke des Gewebes beträgt 0,54 mm und die innere Oberfläche 20 m²/g. Der Dehydratisierungsverlauf ist in Figur 1 gezeigt.

Nach dem Verpacken in feuchtigkeitsdichten Beuteln und Sterilisieren mit Gammastrahlen mit einer Mindestdosis von 15 Kgry ist die Dura mater-Konserve praktisch unbeschränkt lagerfähig und für Transplantationen gebrauchsfertig.

Wird stattdessen die Dehydratisierung der Dura mater ausschließlich mit Aceton auf denselben Wassergehalt von 6 Gew.-% durchgeführt, müssen drei Extraktionsschritte von jeweils 12 Stunden durchgeführt werden.

### Beispiel 2

Ein Spongiosa Knochen wird in geeigneter, dem Fachmann bekannter Weise präpariert. Zur Konservierung wird der präparierte Knochen fünfmal je 24 Stunden mit wasserfreiem Aceton bei Raumtemperatur behandelt. Die Lösemittelmenge beträgt jeweils 500% des Naßgewichts des Knochens. Nach dieser Behandlung beträgt der Wassergehalt 12 Gew.-%. Anschließend wird in der zweiten Stufe der Knochen während 3 Stunden auf -40°C abgekühlt und dann ein Vakuum von 1,2 mbar angelegt zur Entfernung des im Knochen gebildeten Eises durch Sublimation. Die Stellplattentemperatur beträgt 35°C. Der Wassergehalt beträgt nach der zweiten Stufe, die insgesamt 48 Stunden dauert, 2 Gew.-%. Der Dehydratisierungsverlauf ist in Figur 2 gezeigt.

Wird stattdessen die Dehydratisierung des Spongiosa Knochens ausschließlich mit Aceton durchgeführt, so sind bis zu 20 Extraktionsschritte von jeweils 24 Stunden erforderlich, um auf denselben Wassergehalt zu kommen. Dabei sind ca. 60 l Aceton pro 1 kg Knochen erforderlich.

## Patentansprüche

1. Verfahren zum Dehydratisieren von biologischen Geweben zur Herstellung von Transplantat-Konserven, bei dem in einer ersten Stufe mit einem organischen, mit Wasser mischbaren Lösemittel das Gewebe auf einen Wassergehalt. im Bereich von 10 Gew.-% bis 25 Gew.-% dehydratisiert wird und in einer zweiten Stufe durch Gefriertrocknung das Gewebe weiter dehydratisiert wird.

2. Verfahren nach Anspruch 1, bei dem in der ersten Stufe mit Methanol, Ethanol, Propanol, Isopropanol, Aceton, Methylethylketon oder deren Gemischen dehydratisiert wird.

3. Verfahren nach einem der Ansprüche 1 oder 2, bei dem in der ersten Stufe bei einer Temperatur von 0°C bis 70°C dehydratisiert wird.

4. Verfahren nach einem der Ansprüche 1 bis 3, bei dem vor der zweiten Stufe das Gewebe einer Vakuumbehandlung unterworfen wird.

5. Verfahren nach einem der Ansprüche 1 bis 4, bei dem in der ersten Stufe vor dem ersten und nach jedem Extraktionsschritt mit dem organischen Lösemittel das Gewebe einer Vakuumbehandlung unterworfen wird.

6. Verfahren nach einem der Ansprüche 1 bis 5, bei dem in der ersten Stufe während der Extraktion mit dem organischen Lösemittel das Gewebe einer Behandlung mit Ultraschall, einem Vibrator oder Schüttler unterworfen wird.

7. Verfahren nach einem der Ansprüche 1 bis 5, bei dem in der ersten Stufe während der Extraktion mit dem organischen Lösemittel ein Überdruck, alternierender Druck oder Unterdruck angelegt wird.

## Claims

1. A method for dehydrating biological tissues for producing preserved transplants, wherein, in a first step, the tissue is dehydrated to a water content in the range from 10 weight percent to 25 weight percent with an organic solvent which can be mixed with water and, in a second step, the tissue is further dehydrated by freeze drying.

2. A method in accordance with claim 1, wherein, in the first step, dehydration is carried out with methanol, ethanol, propanol, isopropanol, acetone, methyl ethyl ketone or their mixtures.

3. A method in accordance with any one of claims 1 or 2, wherein, in the first step, dehydration is carried out at a temperature from 0°C to 70°C.

4. A method in accordance with any one of claims 1 to 3, wherein the tissue is subjected to a vacuum treatment before the second step.

5. A method in accordance with any one of claims 1 to 4, wherein, in the first step, the tissue is subjected to a vacuum treatment before the first extraction step and after every extraction step with the organic solvent.

6. A method in accordance with any one of claims 1 to 5, wherein, in the first step, the tissue is subjected to a treatment with ultrasound, with a vibrator or with a shaker during the extraction with the organic solvent.

7. A method in accordance with any one of claims 1 to 5, wherein, in the first step, an overpressure, an alternating pressure or an underpressure is applied during the extraction with the organic solvent.

## Revendications

1. Procédé de déshydratation de tissus biologiques pour la production de conserves de greffons, dans lequel le tissu est, lors d'une première étape, déshydraté jusqu'à une teneur en eau de 10 à 25 % en poids à l'aide d'un solvant organique miscible avec l'eau et, lors d'une seconde étape, le tissu est davantage déshydraté par lyophilisation.

2. Procédé selon la revendication 1, dans lequel la déshydratation a lieu lors d'une première étape avec du méthanol, de l'éthanol, du propanol, de l'isopropanol, de l'acétone, de la méthyléthylcétone ou leurs mélanges.

3. Procédé selon l'une des revendications 1 ou 2, dans lequel la déshydratation a lieu lors d'une première étape à une température de 0°C à 70°C.

4. Procédé selon l'une des revendications 1 à 3, dans lequel le tissu est soumis avant la seconde étape à un traitement sous vide.

5. Procédé selon l'une des revendications 1 à 4, dans lequel le tissu est soumis à un traitement sous vide lors de la première étape, avant la première et après chaque étape d'extraction à l'aide du solvant organique.

6. Procédé selon l'une des revendications 1 à 5, dans lequel le tissu est soumis à un traitement par ultrasons, un vibreur ou agitateur-secoueur lors de la première étape pendant l'extraction à l'aide du solvant organique.

7. Procédé selon l'une des revendications 1 à 5, dans lequel une surpression, une pression alternée ou un vide est appliqué(e) lors de la première étape pendant l'extraction à l'aide du solvant organique.
